# EUROPEAN PATENT APPLICATION

(11) **EP 4 770 166 A1**
(43) Date of publication of application: **01.07.2026**
(21) Application number: 24856444.5
(22) Date of filing: 20.08.2024
(51) Int. Cl.: H04W 16/28, H04W 72/231, H04W 72/0457

(54) **TERMINAL, WIRELESS COMMUNICATION METHOD, AND BASE STATION**

(30) Priority: 21.08.2023 JP 2023133862
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2024/029446
(87) International publication number: WO 2025/041756

(57) **Abstract**

A terminal according to one aspect of the present disclosure includes a receiving section that receives a first Medium Access Control (MAC) control element for activating a unified Transmission Configuration Indication (TCI) state using a single transmission/reception point (TRP), and receives a second MAC control element for activating a unified TCI state using a plurality of TRPs, and a control section that, when one or a plurality of first TCI states are activated using the first MAC control element, determines activation of one or a plurality of second TCI states in a mode using the plurality of TRPs, based on the second MAC control element. According to one aspect of the present disclosure, application of TCI states can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

In Rel. 17, it is studied that TCI states (unified TCI states) applicable to a plurality of types of signals (channels/reference signals) are used. Furthermore, in Rel. 18 or later versions, it is studied that the unified TCI states are used in a system using a plurality of transmission/reception points (TRPs).

However, how to switch operation related to the unified TCI states defined in Rel. 17 and operation related to the unified TCI states defined in Rel. 18 or later versions has not been sufficiently studied. Unless this is sufficiently studied, communication is not appropriately performed, and communication throughput may decrease.

In view of this, the present disclosure has one object to provide a terminal, a radio communication method, and a base station that can appropriately perform application of TCI states. Solution to Problem

A terminal according to one aspect of the present disclosure includes a receiving section that receives a first Medium Access Control (MAC) control element for activating a unified Transmission Configuration Indication (TCI) state using a single transmission/reception point (TRP), and receives a second MAC control element for activating a unified TCI state using a plurality of TRPs, and a control section that, when one or a plurality of first TCI states are activated using the first MAC control element, determines activation of one or a plurality of second TCI states in a mode using the plurality of TRPs, based on the second MAC control element.

### Advantageous Effects of Invention

According to one aspect of the present disclosure, application of TCI states can be appropriately performed.

### Brief Description of Drawings

[FIG. 1] FIG. 1A and FIG. 1B are diagrams to show examples of a unified/common TCI framework.
[FIG. 2] FIG. 2A and FIG. 2B are diagrams to show examples of DCI based TCI state indication.
[FIG. 3] FIG. 3A and FIG. 3B are diagrams to show examples of RRC fields and DCI fields in Rel. 17.
[FIG. 4] FIG. 4 is a diagram to show an example of a unified TCI state activation/deactivation MAC CE.
[FIG. 5] FIG. 5A to FIG. 5C are diagrams to show examples of application of indicated TCI states.
[FIG. 6] FIG. 6 is a diagram to show an example of activation (switching) of joint TCI states using a first MAC CE and a second MAC CE.
[FIG. 7] FIG. 7 is a diagram to show an example of activation (switching) of separate TCI states using the first MAC CE and the second MAC CE.
[FIG. 8] FIG. 8A to FIG. 8C are diagrams to show examples of configurations of lists of TCI states according to a second embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### {Physical Layer Procedure/Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC."

Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured).

In a case of two DL RSs, a plurality of QCL types are not the same irrespective of whether reference is reference to the same DL RS or reference to different DL RSs. A QCL type corresponding to each DL RS is given by a higher layer parameter "qcl-Type" in QCL-Info, and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification/RRC IE/TCI State}

A TCI-State (TCI state) associates one or two DL reference signals (RSs) with a corresponding QCL type. If an additional physical cell identifier (PCI) is configured for the RS, the same value is configured for both of the DL RSs.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For Rel. 18 (or later versions), support of another case is under study.

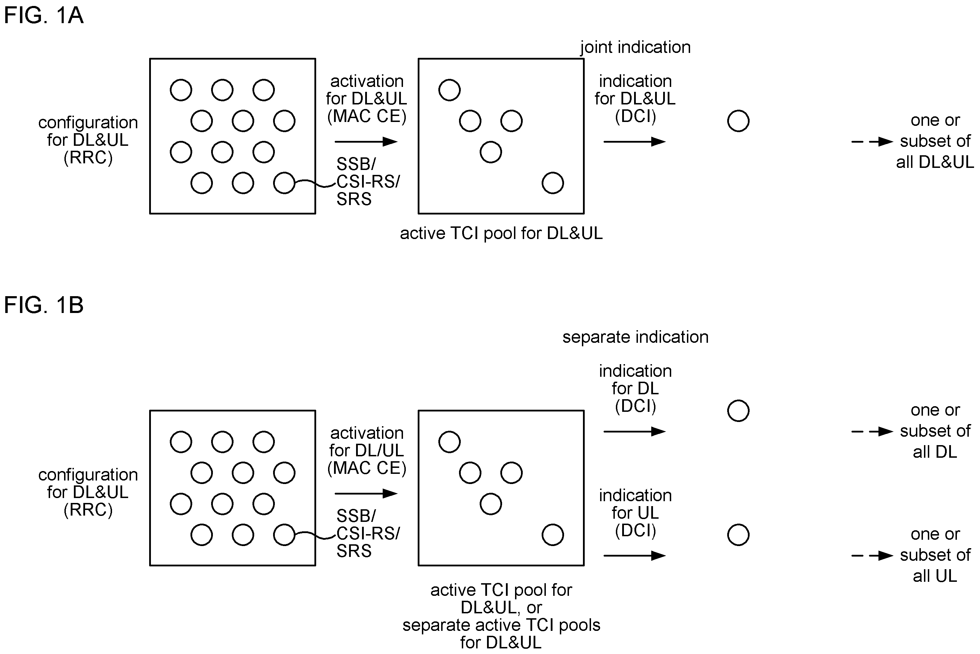

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

### {Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

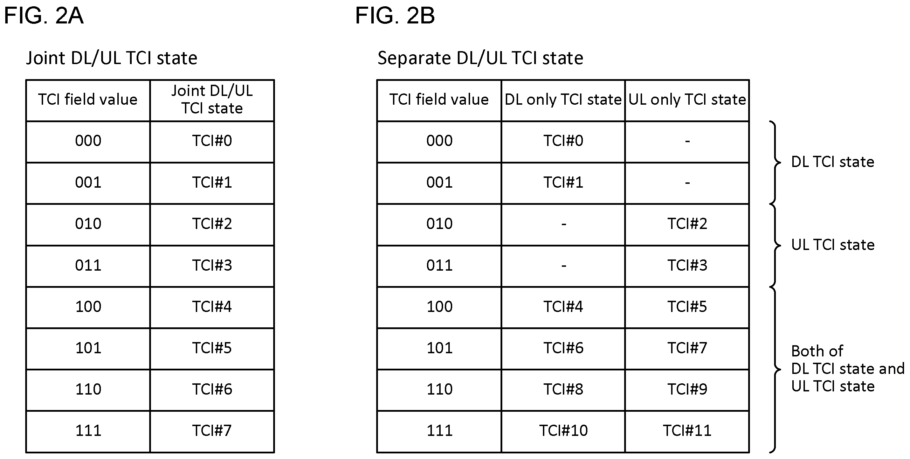

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (PUSCH Repetition)

In Rel. 17, it is studied that PUSCH repetition is introduced.

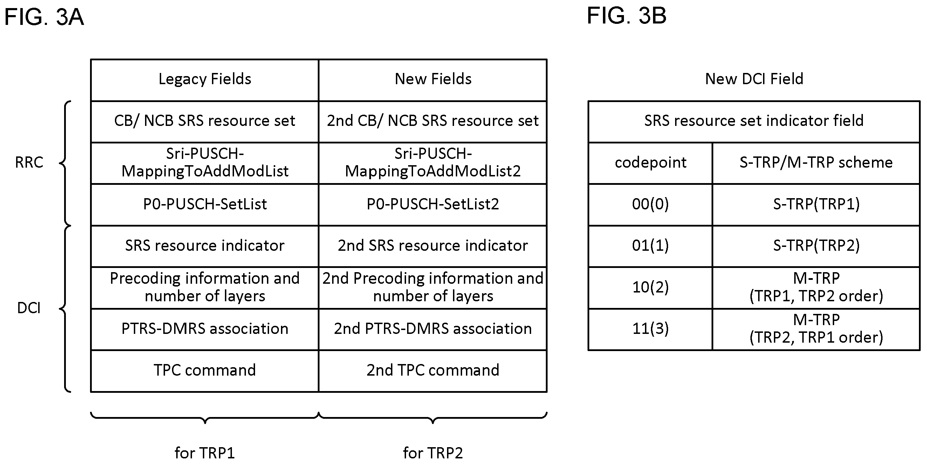

With reference to FIG. 3A and FIG. 3B, RRC fields and DCI fields related to PUSCH repetition will be described below.

The RRC fields related to PUSCH transmission defined in up to Rel. 16 include a field related to a codebook (CB)/non-codebook (NCB) SRS resource set, a field (sri-PUSCH-MappingToAddModList) related to mapping (power control) between an SRI and a PUSCH, and a field (p0-PUSCH-SetList) related to P0 of a PUSCH for each SRI.

The DCI fields related to PUSCH transmission defined in up to Rel. 16 include an SRS resource indicator field, a precoding information and number of layers field, a PTRS-DMRS association field, and a TPC command field.

In Rel. 17, if two CB/NCB SRS resource sets are configured, an SRS resource set indicator field is added in DCI format 0_1/0_2.

The SRS resource set indicator field includes 2 bits. When the SRS resource set indicator field indicates a codepoint "00 (0)", it indicates single-TRP operation using a first TRP (TRP1). When the SRS resource set indicator field indicates a codepoint "01 (1)", it indicates single-TRP operation using a second TRP (TRP2). When the SRS resource set indicator field indicates a codepoint "10 (2)", it indicates multi-TRP operation in order of the first TRP (TRP1) and the second TRP (TRP2) in PUSCH repetition. When the SRS resource set indicator field indicates a codepoint "11 (3)", it indicates multi-TRP operation in order of the second TRP (TRP2) and the first TRP (TRP1) in PUSCH repetition (see FIG. 3B).

When the SRS resource set indicator field is added in DCI format 0_1/0_2, a second field (sri-PUSCH-MappingToAddModList2) related to mapping (power control) between an SRI and a PUSCH and a second field (p0-PUSCH-SetList2) related to P0 of a PUSCH for each SRI are added as new RRC fields (see FIG. 3A). These fields are used as fields for the second TRP (TRP2), and the existing fields are used as fields for the first TRP (TRP1).

When the SRS resource set indicator field is added in DCI format 0_1/0_2, a second SRS resource indicator field, a second precoding information and number of layers field, a second PTRS-DMRS association field, and a second TPC command field are added in the DCI format (see FIG. 3A). These fields are used as fields for the second TRP (TRP2), and the existing fields are used as fields for the first TRP (TRP1).

### (UL TCI State)

In NR of Rel. 16 or later versions, it is studied that the UL TCI state is used as a UL beam indication method. Notification of the UL TCI state is similar to notification of a DL beam (DL TCI state) of the UE. Note that the DL TCI state may be interchangeably interpreted as a TCI state for a PDCCH/PDSCH.

A channel/signal (which may be referred to as a target channel/RS) for which the UL TCI state is configured (indicated) may be at least one of a PUSCH (a PUSCH DMRS), a PUCCH (a PUCCH DMRS), a random access channel (Physical Random Access Channel (PRACH)), an SRS, and the like, for example.

For example, the RS (source RS) to have a QCL relationship with the channel/signal may be a DL RS (for example, an SSB, a CSI-RS, a TRS, or the like), or may be a UL RS (for example, an SRS, an SRS for beam management, or the like).

In the UL TCI state, the RS to have a QCL relationship with the channel/signal may be associated with the panel ID for receiving or transmitting the RS. The association may be explicitly configured (or indicated) by higher layer signaling (for example, RRC signaling, a MAC CE, or the like), or may be implicitly determined.

A correspondence relationship between the RS and the panel ID may be configured by being included in UL TCI state information, or may be configured by being included in at least one of resource configuration information, spatial relation information, and the like of the RS.

QCL types indicated by the UL TCI state may be existing QCL types A to D, may be other QCL types, or may include certain spatial relation, a related antenna port (port index), or the like.

When the UE is indicated with a related panel ID (for example, indicated by DCI) regarding UL transmission, the UE may perform the UL transmission by using a panel corresponding to the panel ID. The panel ID may be associated with the UL TCI state, and when the UE is indicated (or activated) with the UL TCI state regarding a certain UL channel/signal, the UE may identify a panel to be used for transmission of the UL channel/signal in accordance with the panel ID related to the UL TCI state.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (Unified TCI State Activation/Deactivation MAC CE)

In Rel. 17, a MAC CE for activating/deactivating the unified TCI states is defined.

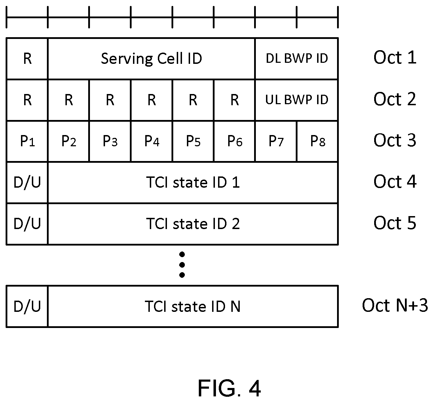

FIG. 4 is a diagram to show an example of a unified TCI state activation/deactivation MAC CE. The MAC CE shown in FIG. 4 includes a field indicating a serving cell ID, a field indicating a DL BWP ID, a field indicating a UL BWP ID, a TCI state ID field ("TCI state ID j" (j is an integer of 1 or greater and N or less)), a field ("Pi" (i is an integer of 1 or greater)) indicating the number of TCI states corresponding to corresponding TCI codepoints, a field ("D/U") indicating that a TCI state of a corresponding TCI state field is DL/joint or UL, and a reserved bit field ("R").

For the UE, the unified TCI state (the joint TCI state or the separate (DL/UL) TCI state) is activated using activation by the MAC CE.

### (TCI Selection Field)

A specific field (new DCI field) may be included in the DCI format (for example, DCI format 1_1/1_2 (which may be referred to as DL DCI)) for scheduling/activation/triggering of a DL channel/signal.

The specific field may be a field indicating application of one or a plurality of (for example, both/two) indicated TCI states (joint/DL TCI states) to the scheduled/activated/triggered DL channel/signal. In other words, the specific field may be a field indicating the number/order of indicated TCI states to be applied.

In the present disclosure, the specific field may be referred to as a TCI selection field, but the term is not limited to this.

An offset (which may be hereinafter interpreted as a scheduling offset, a triggering offset, or the like) between reception of DL DCI and reception of its corresponding DL channel/signal may be smaller than a specific threshold. In this case, the UE may buffer received signals using the indicated TCI states (joint/DL TCI states).

When a DL channel/signal is scheduled/triggered by a first DCI format (for example, DCI format 1_0), and if a single frequency network (SFN) scheme (for example, an SFN scheme for a PDSCH (RRC parameter sfnSchemePdsch)) is configured, a plurality of (for example, both/two) indicated TCI states (joint/DL TCI states) may be applied to the DL channel/signal. Otherwise, one (for example, first) indicated TCI state (joint/DL TCI state) may be applied to the DL channel/signal.

When a DL channel/signal is scheduled by a second DCI format (for example, DCI format 1_1/1_2) not including the specific field, a plurality of (for example, both/two) indicated TCI states (joint/DL TCI states) may be applied to the DL channel/signal.

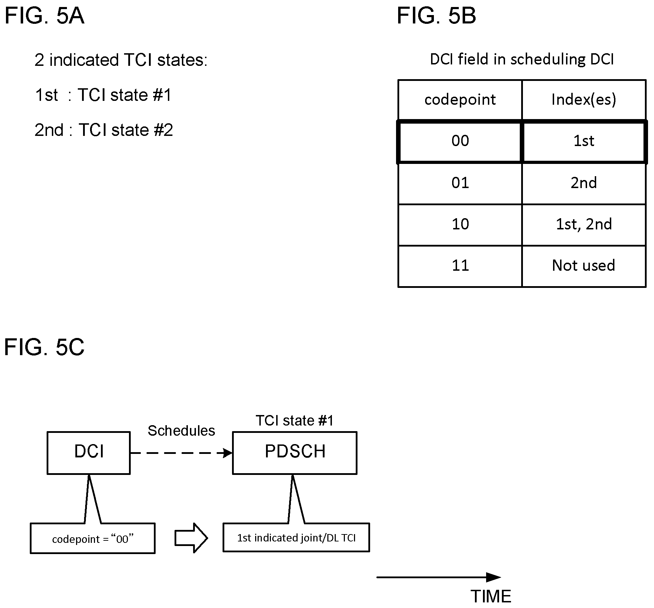

FIG. 5A to FIG. 5C are diagrams to show examples of application of the indicated TCI states. In the example shown in FIG. 5A, for the UE, two indicated TCI states (TCI state #1 as a first TCI state, TCI state #2 as a second TCI state) are indicated.

In the example shown in FIG. 5B, a field (TCI selection field) indicating the number/order of indicated TCI states to be applied is included in the DL DCI. The codepoint "00" of the field indicates application of the first indicated TCI state. The codepoint "01" of the field indicates application of the second indicated TCI state. The codepoint "10" of the field indicates application of both of the first indicated TCI state and the second indicated TCI state. The codepoint "11" of the field is not used.

FIG. 5C shows an example in which the PDSCH is scheduled by the DL DCI. The TCI selection field indicating the codepoint "00" is included in the DCI. Thus, the UE applies TCI state #1 to reception of the PDSCH (see FIG. 5C).

When the offset between reception of scheduling/triggering DL DCI and reception of a scheduled/triggered DL channel/signal is larger than (or equal to or larger than) the specific threshold, the specific DCI field (for example, the TCI selection field) may indicate a channel/signal to which the indicated TCI state is applied. Operation in this case may be at least one of the following operation 1 and operation 2.

The specific threshold may be at least one of an existing threshold (defined in up to Rel. 15/16) and a value based on an RRC parameter/UE capability information defined in Rel. 17/18 or later versions, for example.

The existing threshold may be a value based on UE capability information defined in Rel. 15 in a second frequency range (for example, FR2), for example.

In a first frequency range (for example, FR1), the specific DCI field may be always included in the DCI.

### {Operation 1}

When a specific RRC parameter is configured, the specific field (for example, the TCI selection field) may be included in the DL DCI.

When the codepoint of the specific field included in the DL DCI (for example, DCI format 1_1/1_2) indicates a first value (for example, "00"), the UE may apply a specific indicated TCI state (for example, the first indicated (joint/DL) TCI state) to a plurality of (for example, all of) DL channels/signals (for example, PDSCH DMRS ports of a plurality of (all of) PDSCH transmission occasions) scheduled/triggered by the DCI.

When the codepoint of the specific field included in the DL DCI (for example, DCI format 1_1/1_2) indicates a second value (for example, "01"), the UE may apply a specific indicated TCI state (for example, the second indicated (joint/DL) TCI state) to a plurality of (for example, all of) DL channels/signals (for example, PDSCH DMRS ports of a plurality of (all of) PDSCH transmission occasions) scheduled/triggered by the DCI.

When the codepoint of the specific field included in the DL DCI (for example, DCI format 1_1/1_2) indicates a third value (for example, "10"), the UE may apply a plurality of indicated TCI states (for example, both of the first indicated (joint/DL) TCI state and the second indicated (joint/DL) TCI state) to reception of the DL channels/signals scheduled/triggered by the DCI.

For example, when the codepoint of the specific field included in the DL DCI (for example, DCI format 1_1/1_2) indicates the third value (for example, "10"), the plurality of indicated TCI states may be applied in first order (for example, order of the first indicated TCI state and the second indicated TCI state).

The above operation 1 may be applied in a specific condition. The specific condition may be applied when the offset between reception of at least scheduling/triggering DL DCI (if applicable) and reception of a scheduled/triggered DL channel/signal is equal to or larger than the specific threshold, for example.

### {Operation 2}

The DL channel/signal may be scheduled/triggered by the DL DCI not including the specific field (for example, the TCI selection field). The UE may apply one or a plurality of specific indicated TCI states to the DL channel/signal.

In this case, application of one or a plurality of indicated TCI states using higher layer signaling (RRC/MAC CE) may be configured for the UE (alternative 1). For example, the UE may be configured with which is to be applied among the first indicated TCI state, the second indicated TCI state, and the both thereof to reception of the DL channel/signal, using a specific RRC parameter.

In this case, the UE may determine to apply the first (or second) indicated TCI state to reception of the DL channel/signal (alternative 2).

In this case, the UE may determine to apply a plurality of indicated TCI states (for example, both of the first indicated TCI state and the second indicated TCI state) to reception of the DL channel/signal (alternative 3).

In this case, the UE may determine to apply the same indicated TCI state as the indicated TCI state of the PDCCH corresponding to the DL DCI scheduling the DL channel/signal to the DL channel/signal (alternative 4).

In this case, the UE may apply the indicated TCI state for one or a plurality of TRPs. The application may be determined using an existing TCI field (alternative 5).

The above operation 2 may be applied in a specific condition. The specific condition may be applied when the offset between reception of at least scheduling/triggering DL DCI (if applicable) and reception of a scheduled/triggered DL channel/signal is equal to or larger than the specific threshold (for example, "timeDurationForQCL"), for example.

### (Analysis)

Rel. 17 defines the following: after a list of a plurality of TCI states is configured using RRC signaling and before the TCI states (indicated TCI states) are indicated using a MAC CE/DCI, when the RRC signaling is a reconfiguration with a synchronization procedure, a DL/UL beam (TCI state) identified in the reconfiguration is used, otherwise a DL/UL beam (TCI state) identified in initial access is used.

Rel. 17 defines that, when one TCI state is configured in RRC signaling, the one TCI state becomes the indicated TCI state (configured TCI state) without an indication of a MAC CE/DCI.

In Rel. 18 or later versions, it is studied that, in single-DCI based multi-TRP operation, the presence of the TCI selection field in the DL DCI (DCI format 1_1/1_2) described above is configured using higher layer signaling (RRC signaling) for each DL BWP.

In future radio communication systems (for example, Rel. 18 or later versions), it is studied that the unified TCI state framework in the multi-TRP operation is introduced. Note that one of the unified TCI state framework of Rel. 18 (which may be referred to as a multi-TRP mode in the present disclosure) and the unified TCI state framework of Rel. 17 (which may be referred to as a single-TRP mode in the present disclosure) may be switched for each CC/BWP.

However, a detailed method for switching/controlling the Rel-18 unified TCI state framework and the Rel-17 unified TCI state framework is not sufficiently studied.

In a single-DCI/multi-DCI based multi-TRP, when a plurality of TCI codepoints are activated by a TCI state activation command, whether to perform single-DCI/multi-DCI based multi-TRP operation (default operation) after reception/application of the activation command and before indication of the first TCI state is not sufficiently studied.

Unless these are sufficiently studied, the unified TCI state cannot be appropriately applied for the multi-TRP operation, and communication throughput may decrease.

In view of this, the inventors of the present invention came up with the idea of a method for solving the problem described above.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, multi-TRP (a plurality of TRPs), a multi-TRP system, multi-TRP transmission, and multi-PDSCH may be interchangeably interpreted.

In the present disclosure, single DCI, a single PDCCH, multi-TRP based on single DCI, two TCI states in at least one TCI codepoint being activated, at least one codepoint of a TCI field being mapped to two TCI states, a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, beam indication DCI, DL DCI, a beam indication MAC CE, and beam indication DCI/MAC CE may be interchangeably interpreted. In other words, indication related to an indicated TCI state for a UE may be performed by using at least one of DCI and a MAC CE.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, applying a TCI state/QCL assumption to each channel/signal/resource may mean applying a TCI state/QCL assumption to transmission/reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n-th TCI state (TCI state indicated n-th) may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each of the embodiments of the present disclosure below, description will be mainly given of a method targeting two TRPs for application of a plurality of TCI states in transmission/reception using a plurality of TRPs (in other words, a case where at least one of N and M is 2). However, the number of TRPs may be three or more (more than one), and each embodiment may be applied in accordance with the number of TRPs. In other words, at least one of N and M may be a number larger than 2.

In the present disclosure, schedule, trigger, and activate may be interchangeably interpreted. In the present disclosure, an operation, an option, and an alternative may be interchangeably interpreted.

In the present disclosure, a TCI state, an indicated TCI state, a unified TCI state, and an indicated joint/DL TCI state may be interchangeably interpreted.

In the present disclosure, a unified/indicated TCI state defined in Rel. 17, a Rel-17 unified/indicated TCI state, a unified/indicated TCI state not corresponding to multi-TRP operation, and a unified/indicated TCI state may be interchangeably interpreted. In the present disclosure, a unified/indicated TCI state defined in Rel. 18, a Rel-18 unified/indicated TCI state, a unified/indicated TCI state corresponding to multi-TRP operation, and a unified/indicated TCI state may be interchangeably interpreted.

In the present disclosure, the "unified/indicated TCI state" may be used with or without Rel. X (X is any number). In the present disclosure, Rel. X and Rel. X or later versions may be interchangeably interpreted.

In the present disclosure, application of a unified TCI state defined in up to Rel. 17, a mode related to Rel. 17, a mode related to a Rel-17 TCI state, a mode related to a Rel-17 unified TCI state, a Rel-17 TCI mode, a Rel-17 unified TCI state mode, a Rel-17 unified TCI state framework, a single-TRP mode, and a first mode/configuration may be interchangeably interpreted.

In the present disclosure, application of a unified TCI state defined in Rel. 18, a mode related to Rel. 18, a mode related to a Rel-18 TCI state, a mode related to a Rel-18 unified TCI state, a Rel-18 TCI mode, a Rel-18 unified TCI state mode, a Rel-18 unified TCI state framework, a multi-TRP mode, and a second mode/configuration may be interchangeably interpreted.

In the present disclosure, a MAC CE for a Rel-17 unified TCI state, a MAC CE for activation/deactivation of a Rel-17 unified TCI state, and a first MAC CE may be interchangeably interpreted.

In the present disclosure, a MAC CE for a Rel-18 unified TCI state, a MAC CE for activation/deactivation of a Rel-18 unified TCI state, a MAC CE for Rel. 18 for a unified TCI state for a multi-TRP, and a second MAC CE may be interchangeably interpreted.

In the present disclosure, a Rel-18 unified TCI state being configured, a Rel-18 unified TCI state for a single-DCI based multi-TRP being configured, and a DCI field (for example, a TCI selection field/TCI state selection field) for Rel. 18 being configured may be interchangeably interpreted.

In the present disclosure, a size, the number of bits, a field, and a payload may be interchangeably interpreted.

In the present disclosure, a mode, an operation, a configuration, and a framework may be interchangeably interpreted.

### (Radio Communication Method)

### <Zeroth Embodiment>

Based on the specific condition, a first specific field (for example, a TCI selection field/TCI state selection field) may be included in the DCI format (for example, DCI format 1_1/1_2 (which may be referred to as DL DCI)) for scheduling/activation/triggering of a DL channel/signal.

The first specific field may be a field indicating application of one or a plurality of (for example, both/two) indicated TCI states (joint/DL TCI states) to the scheduled/activated/triggered DL channel/signal.

The first specific field may be represented by a specific number of bits (for example, 2 bits).

The second mode need not be configured using higher layer signaling (for example, RRC signaling).

In this case, the TCI state selection field need not be included in the DL DCI. The UE may assume that the TCI state selection field is not included in the DL DCI.

The second mode may be configured using higher layer signaling (for example, RRC signaling).

In this case, the TCI state selection field may be included in the DL DCI. The UE may assume that the TCI state selection field is included in the DL DCI.

In this case, the second mode may be indicated to the UE, using a MAC CE. The UE may be indicated with the TCI state (DL/joint TCI state) of a scheduled/activated PDSCH, using the TCI state selection field.

The second mode need not be indicated to the UE, using a MAC CE. In this case, the UE may ignore (need not monitor/need not use) the TCI state selection field.

Based on the specific condition, a second specific field (for example, an SRS resource set indicator field) may be included in the DCI format (for example, DCI format 0_1/0_2 (which may be referred to as DL DCI)) for scheduling/activation/triggering of a DL channel/signal.

The second mode need not be configured using higher layer signaling (for example, RRC signaling). Two SRS resource sets having a specific usage (for example, the codebook (CB)/non-codebook (NCB)) need not be configured using higher layer signaling (for example, RRC signaling).

In this case, the SRS resource set indicator field need not be included in the DL DCI. The UE may assume that the SRS resource set indicator field is not included in the DL DCI.

The second mode may be configured using higher layer signaling (for example, RRC signaling), and two SRS resource sets having a specific usage (for example, the codebook (CB)/non-codebook (NCB)) may be configured using higher layer signaling (for example, RRC signaling).

In this case, the SRS resource set indicator field may be included in the DL DCI. The UE may assume that the SRS resource set indicator field is included in the DL DCI.

In this case, the second mode may be indicated to the UE, using a MAC CE. The UE may be indicated with the TCI state (DL/joint TCI state) of a scheduled/activated PDSCH, using the SRS resource set indicator field.

The second mode need not be indicated to the UE, using a MAC CE. In this case, the UE may ignore (need not monitor/need not use) the SRS resource set indicator field.

Note that configuration of the second mode may be performed using a specific (dedicated) RRC parameter. Configuration of the TCI framework (unified TCI state) of Rel. 18 may be performed by using (interpreting) any RRC parameter used for another configuration (for example, a parameter (for example, tciSelection-PresentInDCI-r18) indicating whether the TCI state selection field is present in DCI).

MAC CE based switching between the first mode and the second mode may be defined. The switching may be at least one of the following alternatives 0-1 to 0-3.

The UE may determine whether or not the second mode is indicated, based on at least one of a type of a received MAC CE and the number of TCI states (joint/DL/UL TCI states) corresponding to (mapped to) the TCI codepoint activated using the second MAC CE (alternative 0-1).

For example, when both of the first and second TCI states (joint/DL/UL TCI states) correspond to the TCI codepoint activated by the second MAC CE, the UE may determine that the second mode is indicated. For example, when only the first (or second) TCI state (joint/DL/UL TCI state) corresponds to the TCI codepoint activated by the second MAC CE, the UE may determine that the first mode is indicated. For example, when the UE receives the first MAC CE, the UE may determine that the first mode is indicated.

The UE may determine whether the second mode is indicated, based on the type of the received MAC CE (for example, whether the first MAC CE is received or the second MAC CE is received). When the UE receives the first MAC CE, the UE may determine that the first mode is indicated, and when the UE receives the second MAC CE, the UE may determine that the second mode is indicated (alternative 0-2).

The indication of the second mode using a MAC CE may be notified using an explicit field included in the MAC CE, for example (alternative 0-3).

### <First Embodiment>

A first embodiment relates to switching between the first mode and the second mode.

In each embodiment of the present disclosure, "first" (Rel. 17) and "second" (Rel. 18) may be interchangeably interpreted (each embodiment may be applied with these being interchanged with each other).

The UE may determine activation/deactivation of the TCI state (Rel-17 unified TCI state/Rel-18 unified TCI state), based on at least one of the first MAC CE and the second MAC CE.

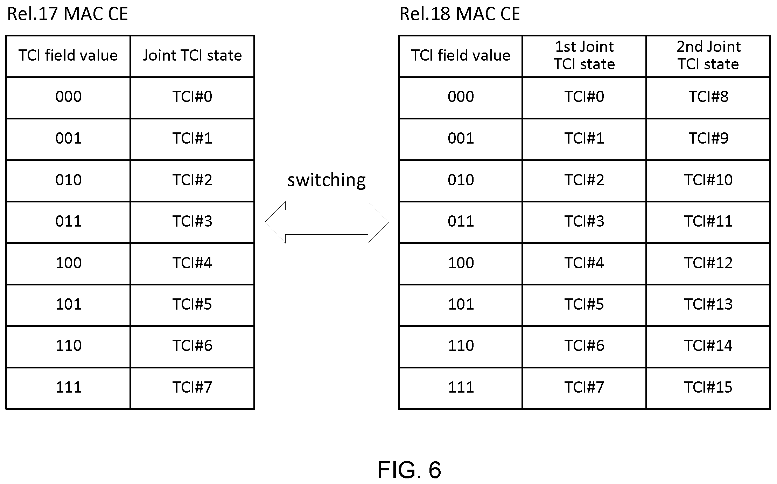

FIG. 6 is a diagram to show an example of activation (switching) of the joint TCI states using the first MAC CE and the second MAC CE. In the example shown in FIG. 6, in the first MAC CE (Rel-17 MAC CE), one joint TCI state corresponds to the codepoint of the TCI field, and in the second MAC CE (Rel-18 MAC CE), two joint TCI states correspond to the codepoint of the TCI field. Switching of these may be performed using the following Embodiment 1-1/1-2/1-3.

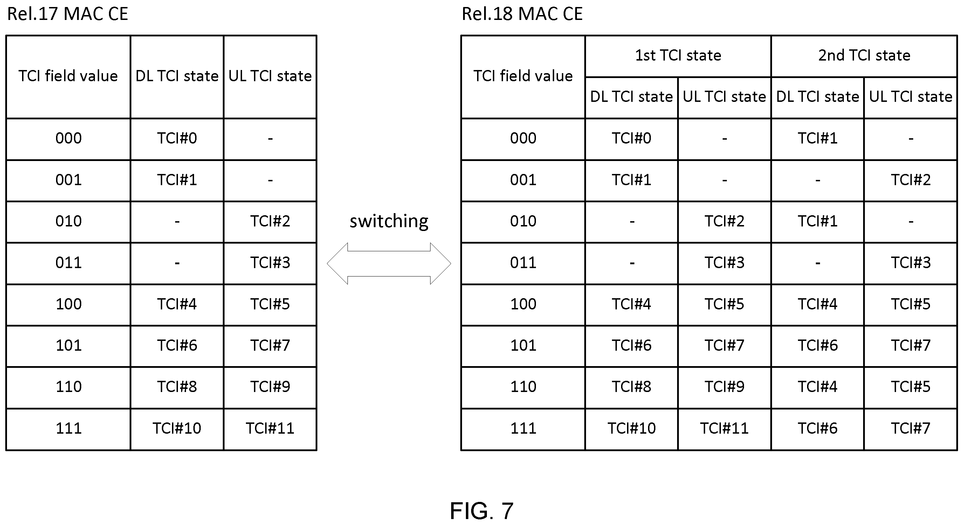

FIG. 7 is a diagram to show an example of activation (switching) of the separate TCI states using the first MAC CE and the second MAC CE. In the example shown in FIG. 7, in the first MAC CE (Rel-17 MAC CE), one separate TCI state (DL/UL TCI state) corresponds to the codepoint of the TCI field, and in the second MAC CE (Rel-18 MAC CE), a plurality of (first and second) separate TCI states (DL/UL TCI states) correspond to the codepoint of the TCI field. Switching of these may be performed using the following Embodiment 1-1/1-2/1-3.

Note that the correspondence relationships shown in FIG. 6 and FIG. 7 are merely examples, and these examples are not restrictive.

### <<Embodiment 1-1>>

When TCI states are activated using the first MAC CE, the UE may assume that one or a plurality of TCI states are activated using the second MAC CE at a specific timing after (or at or after) a plurality of (for example, all of) active TCI states are deactivated using a MAC CE (third MAC CE, for example, another first MAC CE).

Such a configuration can enable separate operation of the first mode and the second mode, and can simplify UE operation.

Note that the MAC CE for deactivation and the second MAC CE may be simultaneously transmitted/received.

The MAC CE for deactivation may be transmitted/received temporally before the second MAC CE.

The MAC CE for deactivation may be transmitted/received temporally after the second MAC CE. In this case, the UE may assume to receive the MAC CE for deactivation after receiving the second MAC CE.

### <<Embodiment 1-2>>

When TCI states are activated using the first MAC CE, the UE may receive the second MAC CE and be indicated to activate the TCI states.

When the UE receives the second MAC CE, the UE may deactivate a plurality of (for example, all of) active TCI states, and activate the TCI states indicated using the second MAC CE.

Such a configuration can reduce overhead of the MAC CEs through reduction in the number of MAC CEs to be used.

### <<Embodiment 1-3>>

When TCI states are activated using the first MAC CE, the UE may receive the second MAC CE and be indicated to activate the TCI states.

The UE may determine that a plurality of (for example, all of) active TCI states indicated using the first MAC CE as the first (or second) TCI states and a plurality of (for example, all of) active TCI states indicated using the second MAC CE as the second (or first) TCI states are the active TCI states in the second mode.

For example, the UE may determine that a plurality of (for example, all of) active TCI states indicated using the first MAC CE are the first (or second) TCI states, and a plurality of (for example, all of) active TCI states indicated using the second MAC CE are the second (or first) TCI states.

The UE may receive the first MAC CE after the TCI states are activated using the second MAC CE. In this case, only the first TCI states (active TCI states) may be determined as the active TCI states, and the second TCI states (active TCI states) may be determined to be deactivated.

Such a configuration can further reduce information to be notified to the UE (as compared with Embodiment 1-2), and can reduce overhead of the MAC CEs.

Note that whether or not the MAC CE based switching between the first mode and the second mode is supported may be reported by UE capability information.

Only the UE supporting both of the first mode and the second mode may support the MAC CE based switching between the first mode and the second mode. In other words, a capability related to support of the first mode and a capability related to the second mode may be defined as pre-requisite capabilities/functions of the capabilities related to the MAC CE based switching between the first mode and the second mode.

The UE supporting the second mode and not supporting the first mode need not assume that the first mode is configured/indicated using higher layer signaling (RRC/MAC CE). In this case, when operation using a single TRP is configured/indicated, application of one indicated TCI state among a plurality of (for example, two) indicated TCI states in the first mode to a channel/signal (for example, a PDSCH/PDCCH/PUSCH/PUCCH/CSI-RS/SRS) may be indicated to the UE.

According to the first embodiment described above, switching between the first mode and the second mode can be appropriately performed using RRC signaling/MAC CE.

### <Second Embodiment>

A second embodiment relates to operation in the second mode in a specific case.

In the specific case, the UE may determine at least one of operation in the second mode (for example, determination of the TCI state) and which is applied among the first mode and the second mode.

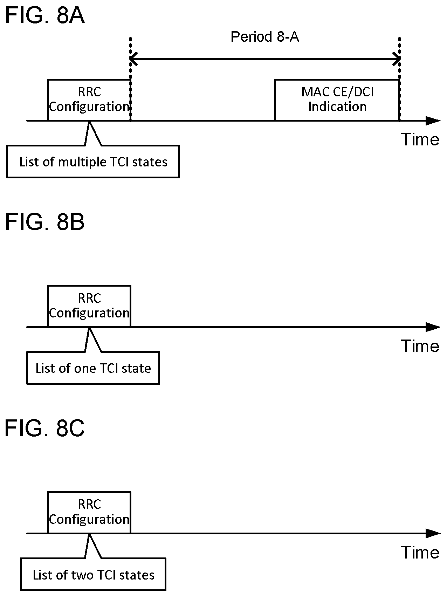

The specific case may be at least one of the following cases, for example.
- A period from when a list of a plurality of TCI states (a list including a plurality of TCI states) is configured using RRC signaling to when the indicated TCI state is indicated using a MAC CE/DCI (period 8-A in FIG. 8A).
- A case in which (a list including) one TCI state is configured using RRC signaling (see FIG. 8B).
- A case in which (a list including) a plurality of (for example, two) TCI states is configured using RRC signaling (see FIG. 8C).

In the specific case, the UE may determine the TCI state/QCL assumption/beam to be applied to a plurality of channels/signals.

Note that, in the present disclosure, "to when the indicated TCI state is indicated using a MAC CE/DCI" may be interpreted as "to a start/last symbol of reception of a MAC CE/DCI related to the indicated TCI state" or "to when the indicated TCI state is indicated using a MAC CE/DCI and the indicated TCI state is applied".

The UE may perform switching between the first mode and the second mode in operation related to single DCI, based on at least one method described in the above zeroth embodiment.

The UE may perform switching between the first mode and the second mode in operation related to multi-DCI, based on a specific higher layer parameter.

For example, when an RRC parameter related to the unified TCI state (for example, a parameter related to a list of DL/joint TCI states (for example, dl-OrJointTCI-StateList)/parameter related to the UL TCI states (TCI-UL-State)) is configured, the UE may determine to apply the first mode.

For example, when an RRC parameter related to the unified TCI state (for example, a parameter related to a list of DL/joint TCI states (for example, dl-OrJointTCI-StateList)/parameter related to the UL TCI states (TCI-UL-State)) is configured, and a PDCCH configuration (for example, PDCCH-Config) including CORESET pool indices (for example, coresetPoolIndex) having a plurality of (for example, two) different values is not configured in a CORESET configuration (for example, ControlResourceSet), the UE may determine to apply the first mode.

For example, when an RRC parameter related to the unified TCI state (for example, a parameter related to a list of DL/joint TCI states (for example, dl-OrJointTCI-StateList)/parameter related to the UL TCI states (TCI-UL-State)) is configured, and a PDCCH configuration (for example, PDCCH-Config) including CORESET pool indices (for example, coresetPoolIndex) having a plurality of (for example, two) different values is configured in a CORESET configuration (for example, ControlResourceSet), the UE may determine to apply the second mode.

### <<Embodiment 2-1>>

The present embodiment may be applied in a period from when a list of a plurality of (for example, two, or three or more) TCI states (a list including a plurality of TCI states) is configured using RRC signaling to when the indicated TCI state is indicated using a MAC CE/DCI, for example.

The list of a plurality of TCI states may be a list of DL/joint TCI states (for example, dl-OrJointTCI-StateList) or a list (ul-TCI-StateList-r17) of UL TCI states (TCI-UL-State), for example.

For example, the list of DL/joint TCI states (for example, dl-OrJointTCI-StateList) may be configured in a PDSCH configuration (for example, PDSCH-Config). The list (ul-TCI-StateList-r17) of UL TCI states (TCI-UL-State) may be configured in a UL BWP configuration (for example, BWP-UplinkDedicated). These may also hold true in the following Embodiment 2-2/2-3.

### {Option 2-1-1}

When the UE receives a list of a plurality of TCI states as a reconfiguration with a synchronization procedure (Reconfiguration with sync procedure), the UE may determine to apply the DL/UL beam/TCI state/QCL assumption identified in the reconfiguration to a plurality of channels/signals. Otherwise, the UE may determine to apply the DL/UL beam/TCI state/QCL assumption identified in initial access to a plurality of channels/signals.

### {Option 2-1-2}

When the UE receives a list of a plurality of TCI states as a reconfiguration with a synchronization procedure (Reconfiguration with sync procedure), the UE may determine that the TCI state identified in the reconfiguration is one (for example, first) of the indicated TCI states. In this case, the UE may determine the other (for example, second) indicated TCI state, based on a specific rule/higher layer signaling (RRC signaling/MAC CE).

The specific rule may be a rule that the TCI state having a specific TCI state ID (for example, a lowest/highest/lower/higher TCI state ID) corresponds to the other (second) indicated TCI state, for example.

In the specific rule, for example, in a period from when a plurality of active TCI states are indicated using a MAC CE to when the indicated TCI state is indicated using DCI, the UE may determine to apply the TCI state of a specific TCI codepoint to a plurality of channels/signals. For example, the UE may determine that the second indicated TCI state to be applied to a plurality of channels/signals is the second indicated TCI state corresponding to the specific TCI codepoint (for example, the lowest/highest TCI codepoint).

### {Option 2-1-3}

When the UE receives a list of a plurality of TCI states as a reconfiguration with a synchronization procedure (Reconfiguration with sync procedure), the UE may determine the first indicated TCI state and the second indicated TCI state, based on a specific rule/higher layer signaling (RRC signaling/MAC CE).

In the specific rule, the first indicated TCI state and the second indicated TCI state may each be the TCI state corresponding to a specific (for example, lowest/highest) TCI state ID. For example, the first indicated TCI state may be the TCI state corresponding to the first lowest (or highest) TCI state ID, and the second indicated TCI state may be the TCI state corresponding to the second lowest (or highest) TCI state ID.

In the specific rule, for example, in a period from when a plurality of active TCI states are indicated using a MAC CE to when the indicated TCI state is indicated using DCI, the UE may determine to apply the TCI state of a specific TCI codepoint to a plurality of channels/signals. For example, the UE may determine that the first indicated TCI state and the second indicated TCI state to be applied to a plurality of channels/signals are respectively the first indicated TCI state and the second indicated TCI state corresponding to the specific TCI codepoint (for example, the lowest/highest TCI codepoint).

Note that Embodiment 2-1 (option 2-1-1/2-1-2/2-1-3) may be applied in at least one of only the single-DCI based multi-TRP, only the multi-DCI based multi-TRP, and both of the single-DCI based multi-TRP and the multi-DCI based multi-TRP.

According to Embodiment 2-1, a plurality of (for example, two) indicated TCI states for the single/multi-DCI based multi-TRP can be appropriately indicated even in a period before the indicated TCI state is indicated using a MAC CE/DCI.

### <<Embodiment 2-2>>

The present embodiment may be applied when (a list including) one TCI state is configured using RRC signaling, for example.

Using RRC signaling, for example, a list of one DL/joint TCI state (for example, dl-OrJointTCI-StateList) or a list (ul-TCI-StateList-r17) of one UL TCI state (TCI-UL-State) may be configured.

In this case, the UE need not assume that the second mode is configured. The UE may assume/determine that the second mode is not configured.

For example, when a list of one DL/joint TCI state (for example, dl-OrJointTCI-StateList) or a list (ul-TCI-StateList-r17) of one UL TCI state (TCI-UL-State) is configured for the UE, the UE need not assume that a PDCCH configuration (for example, PDCCH-Config) including CORESET pool indices (for example, coresetPoolIndex) having a plurality of (for example, two) different values is configured in a CORESET configuration (for example, ControlResourceSet).

For example, when a list of one DL/joint TCI state (for example, dl-OrJointTCI-StateList) or a list (ul-TCI-StateList-r17) of one UL TCI state (TCI-UL-State) is configured for the UE, the UE may assume that a PDCCH configuration (for example, PDCCH-Config) including CORESET pool indices (for example, coresetPoolIndex) having a plurality of (for example, two) different values is not configured in a CORESET configuration (for example, ControlResourceSet).

### <<Embodiment 2-3>>

The present embodiment may be applied when (a list including) a plurality of (for example, two) TCI states is configured using RRC signaling, for example.

Using RRC signaling, for example, a list (for example, dl-OrJointTCI-StateList) of a plurality of (for example, two) DL/joint TCI states or a list (ul-TCI-StateList-r17) of a plurality of (for example, two) UL TCI states (TCI-UL-State) may be configured.

In this case, the UE may determine/assume that the second mode is configured.

For example, the UE may determine that two configured DL/joint TCI states are the first DL/joint TCI state and the second DL/joint TCI state and determine that two configured UL TCI states are the first UL TCI state and the second UL TCI state, without an indication of a MAC CE/DCI.

Association between the IDs of two configured TCI states and the first TCI state and the second TCI state may be defined in a specification in advance, or may be configured using higher layer signaling. For example, of the IDs of two configured TCI states, the first TCI state may correspond to the smaller (or larger) ID, and the second TCI state may correspond to the larger (or smaller) ID.

In a case of the single-DCI based multi-TRP, the first TCI state may correspond to the first TRP, and the second TCI state may correspond to the second TRP.

In a case of the multi-DCI based multi-TRP, the first TCI state may be interpreted as the indicated TCI state of the CORESET pool index (coresetPoolIndex) having a first value (for example, 0), and the second TCI state may be interpreted as the indicated TCI state of the CORESET pool index (coresetPoolIndex) having a second value (for example, 1).

Note that Embodiment 2-3 may be applied in at least one of only the single-DCI based multi-TRP, only the multi-DCI based multi-TRP, and both of the single-DCI based multi-TRP and the multi-DCI based multi-TRP.

According to Embodiment 2-3, a plurality of (for example, two) indicated TCI states for the single/multi-DCI based multi-TRP can be appropriately indicated even in a period before the indicated TCI state is indicated using a MAC CE/DCI.

Note that, regarding the second embodiment (Embodiment 2-1/2-2/2-3), operations of the single-DCI based multi-TRP and the multi-DCI based multi-TRP may be separately defined, based on whether or not received RRC signaling is a reconfiguration with a synchronization procedure (Reconfiguration with sync procedure).

Regarding the second embodiment (Embodiment 2-1/2-2/2-3), the operations of the single-DCI based multi-TRP and the multi-DCI based multi-TRP may be defined in common, regardless of the DL/UL beam identified in initial access (random access).

According to the second embodiment described above, the operation mode and the TCI state to be applied can be appropriately determined even in the specific case.

### <Variations>

The UE may determine switching between at least two of the above-described embodiments, based on at least one of higher layer signaling (RRC/MAC CE) and a UE capability.

Only the UE supporting a specific UE capability may support switching between the first mode and the second mode using a MAC CE. The UE not supporting the specific UE capability may perform switching between the first mode and the second mode using RRC signaling.

The UE configured with the first mode may operate using the unified TCI state framework defined in Rel. 17.

The UE configured with the first mode may operate by determining that the number of indicated TCI states of those defined as the Rel-18 unified TCI states is one.

The UE configured with the second mode may operate using the unified TCI state framework defined in Rel. 18. The UE may determine/assume that the number of indicated TCI states is one or plural (for example, two).

In the present disclosure, a MAC CE for joint TCI state indication and a MAC CE for separate TCI state indication may be defined as a common MAC CE, or may be defined as different MAC CEs.

Regarding each embodiment of the present disclosure, the embodiment for separate TCI state indication may be applied to a joint TCI state indication method, and the embodiment for joint TCI state indication may be applied to a separate TCI state indication method.

In the present disclosure, a MAC CE for the single-DCI based multi-TRP and a MAC CE for the Rel-17 unified TCI state may be identified by different logical channel IDs (LCIDs).

In the present disclosure, a MAC CE for the multi-DCI and a MAC CE for the Rel-17 unified TCI state may be identified by different LCIDs, or may be identified by a common LCID.

### <Supplements>

### {Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by the MAC CE, the MAC CE may be identified by a new logical channel ID (LCID) being included in a MAC sub-header, the new logical channel ID being not defined in an existing specification.

In a case where the notification described above is performed by the DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to a UE in the above-described embodiments may be performed periodically, semipersistently, or aperiodically.

### {Notification of Information from UE}

Any notification of information from a UE (to a NW) (in other words, any transmission/reporting, in a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by the MAC CE, the MAC CE may be identified by a new LCID being included in a MAC sub-header, the new LCID being not defined in an existing specification.

In a case where the notification described above is performed by the UCI, the notification described above may be transmitted by using a PUCCH or a PUSCH.

Any notification of information from a UE in the above-described embodiments may be performed periodically, semipersistently, or aperiodically.

### {Application of Respective Embodiments}

At least one of the above-described embodiments may be applied to a case where a specific condition is satisfied. The specific condition may be defined in a specification, or may be notified to the UE/BS by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, switching between the mode related to the Rel-17 unified TCI state and the mode related to the Rel-18 unified TCI state) regarding at least one of the embodiments described above
- number of supported unified TCI states

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling/physical layer signaling. For example, the specific information may be information indicating enabling of the Rel-18 TCI state, any RRC parameter for a specific release (for example, Rel. 18/19), or the like.

When not supporting at least one of the specific UE capabilities or not configured with the specific information, the UE may apply operation of Rel. 15/16, for example.

### (Supplementary Note A)

Regarding one embodiment of the present disclosure, the following supplementary notes of the invention will be given.

### {Supplementary Note A-1}

A terminal including: a receiving section that receives a first Medium Access Control (MAC) control element for activating a unified Transmission Configuration Indication (TCI) state using a single transmission/reception point (TRP), and receives a second MAC control element for activating a unified TCI state using a plurality of TRPs; and a control section that, when one or a plurality of first TCI states are activated using the first MAC control element, determines activation of one or a plurality of second TCI states in a mode using the plurality of TRPs, based on the second MAC control element.

### {Supplementary Note A-2}

The terminal according to supplementary note A-1, wherein the receiving section further receives a third MAC control element for deactivating the one or the plurality of first TCI states, and the control section determines activation of the one or the plurality of second TCI states at a specific timing after the deactivation.

### {Supplementary Note A-3}

The terminal according to supplementary note A-1 or A-2, wherein the control section determines deactivation of the one or the plurality of first TCI states and activation of the one or the plurality of second TCI states, based on the second MAC control element.

### {Supplementary Note A-4}

The terminal according to any one of supplementary notes A-1 to A-3, wherein the control section determines that the one or the plurality of first TCI states and the one or the plurality of second TCI states are active TCI states in the mode using the plurality of TRPs, based on the second MAC control element.

### (Supplementary Note B)

Regarding one embodiment of the present disclosure, the following supplementary notes of the invention will be given.

### {Supplementary Note B-1}

A terminal including: a control section that determines use of a mode using a plurality of transmission/reception points (TRPs) in each of a period from when a list including a plurality of Transmission Configuration Indication (TCI) states is configured using Radio Resource Control (RRC) signaling to when an indicated TCI state is indicated using at least one of a Medium Access Control (MAC) control element and downlink control information, a case in which a list including one TCI state is configured using the RRC signaling, and a case in which a list including two TCI states is configured using the RRC signaling; and a transmitting/receiving section that transmits or receives a plurality of signals by using one of the mode using the plurality of TRPs and a mode using a single TRP.

### {Supplementary Note B-2}

The terminal according to supplementary note B-1, wherein when the transmitting/receiving section receives the list including the plurality of TCI states as a reconfiguration with a synchronization procedure, the control section applies a TCI state identified in the reconfiguration to the plurality of signals.

### {Supplementary Note B-3}

The terminal according to supplementary note B-1 or B-2, wherein when the list including the one TCI state is configured using the RRC signaling, the control section determines that the mode using the plurality of TRPs is not configured.

### {Supplementary Note B-4}

The terminal according to any one of supplementary notes B-1 to B-3, wherein when the list including the two TCI states is configured using the RRC signaling, the control section determines that the mode using the plurality of TRPs is configured.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

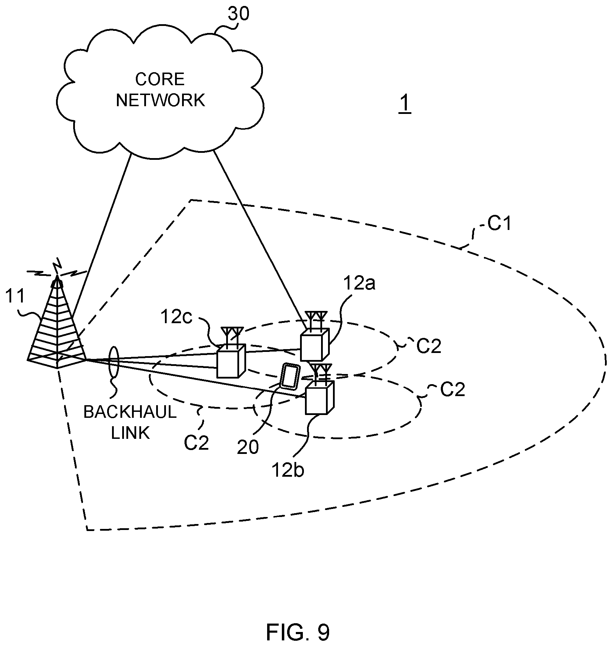

FIG. 9 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

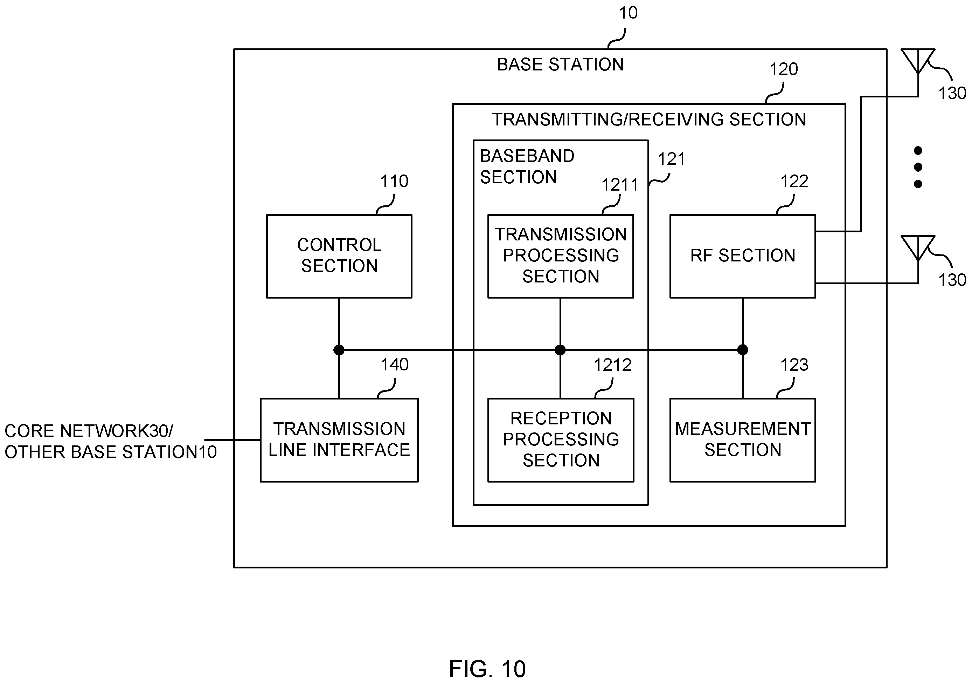

FIG. 10 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a first Medium Access Control (MAC) control element for activating a unified Transmission Configuration Indication (TCI) state using a single transmission/reception point (TRP), and transmit a second MAC control element for activating a unified TCI state using a plurality of TRPs. The control section 110 may, when activating one or a plurality of first TCI states using the first MAC control element, indicate activation of one or a plurality of second TCI states in a mode using the plurality of TRPs by using the second MAC control element (first embodiment).

The control section 110 may indicate use of a mode using a plurality of transmission/reception points (TRPs) in each of a period from when a list including a plurality of Transmission Configuration Indication (TCI) states is configured using Radio Resource Control (RRC) signaling to when an indicated TCI state is indicated using at least one of a Medium Access Control (MAC) control element and downlink control information, a case in which a list including one TCI state is configured using the RRC signaling, and a case in which a list including two TCI states is configured using the RRC signaling. The transmitting/receiving section 120 may transmit or receive a plurality of signals by using one of the mode using the plurality of TRPs and a mode using a single TRP (second embodiment).

### (User Terminal)

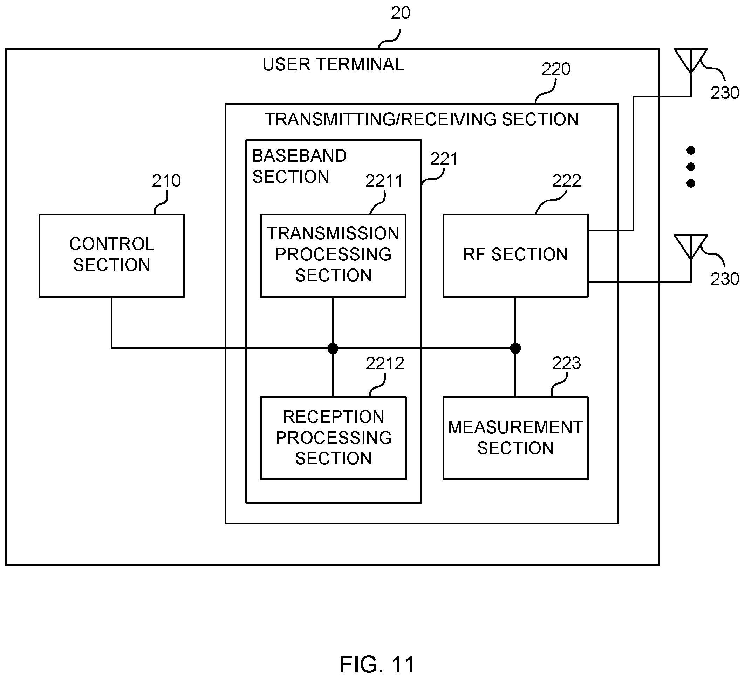

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a first Medium Access Control (MAC) control element for activating a unified Transmission Configuration Indication (TCI) state using a single transmission/reception point (TRP), and receive a second MAC control element for activating a unified TCI state using a plurality of TRPs. The control section 210 may, when one or a plurality of first TCI states are activated using the first MAC control element, determine activation of one or a plurality of second TCI states in a mode using the plurality of TRPs, based on the second MAC control element (first embodiment).

The transmitting/receiving section 220 may further receive a third MAC control element for deactivating the one or the plurality of first TCI states. The control section 210 may determine activation of the one or the plurality of second TCI states at a specific timing after the deactivation.

The control section 210 may determine deactivation of the one or the plurality of first TCI states and activation of the one or the plurality of second TCI states, based on the second MAC control element.

The control section 210 may determine that the one or the plurality of first TCI states and the one or the plurality of second TCI states are active TCI states in the mode using the plurality of TRPs, based on the second MAC control element.

The control section 210 may determine use of a mode using a plurality of transmission/reception points (TRPs) in each of a period from when a list including a plurality of Transmission Configuration Indication (TCI) states is configured using Radio Resource Control (RRC) signaling to when an indicated TCI state is indicated using at least one of a Medium Access Control (MAC) control element and downlink control information, a case in which a list including one TCI state is configured using the RRC signaling, and a case in which a list including two TCI states is configured using the RRC signaling. The transmitting/receiving section 220 may transmit or receive a plurality of signals by using one of the mode using the plurality of TRPs and a mode using a single TRP (second embodiment).

When the transmitting/receiving section 220 receives the list including the plurality of TCI states as a reconfiguration with a synchronization procedure, the control section 210 may apply a TCI state identified in the reconfiguration to the plurality of signals (second embodiment).

When the list including the one TCI state is configured using the RRC signaling, the control section 210 may determine that the mode using the plurality of TRPs is not configured (second embodiment).

When the list including the two TCI states is configured using the RRC signaling, the control section 210 may determine that the mode using the plurality of TRPs is configured (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

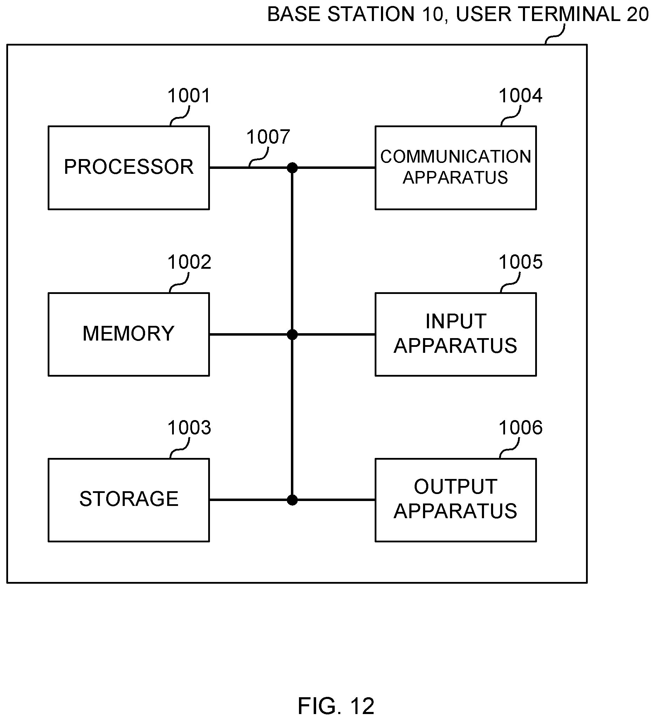

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

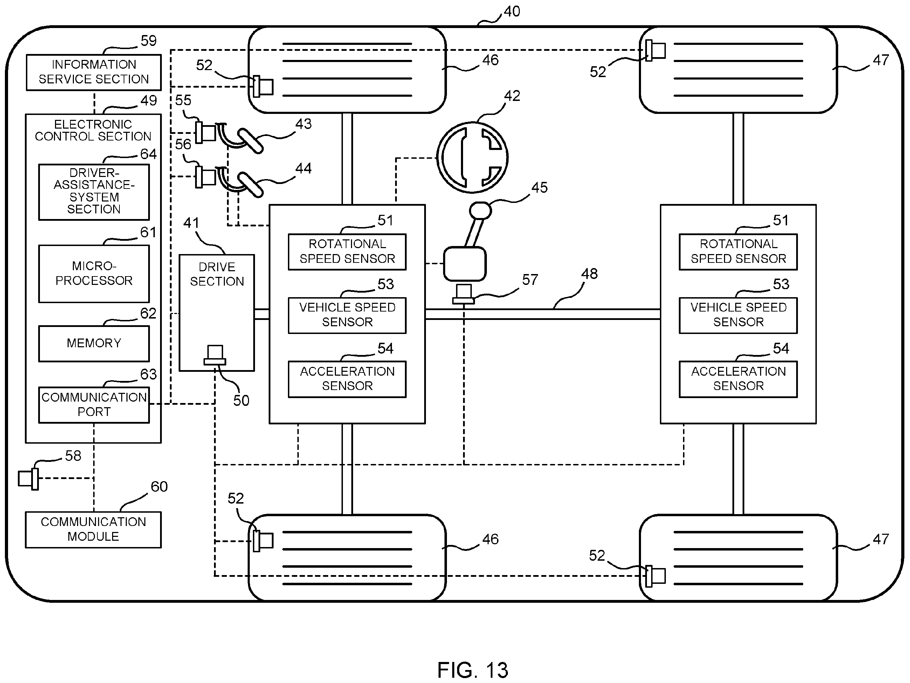

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-133862, filed on August 21, 2023, the contents of which are incorporated herein by reference in their entirety.

## Claims

1. A terminal comprising:
a receiving section that receives a first Medium Access Control (MAC) control element for activating a unified Transmission Configuration Indication (TCI) state using a single transmission/reception point (TRP), and receives a second MAC control element for activating a unified TCI state using a plurality of TRPs; and
a control section that, when one or a plurality of first TCI states are activated using the first MAC control element, determines activation of one or a plurality of second TCI states in a mode using the plurality of TRPs, based on the second MAC control element.

2. The terminal according to claim 1, wherein
the receiving section further receives a third MAC control element for deactivating the one or the plurality of first TCI states, and
the control section determines activation of the one or the plurality of second TCI states at a specific timing after the deactivation.

3. The terminal according to claim 1, wherein
the control section determines deactivation of the one or the plurality of first TCI states and activation of the one or the plurality of second TCI states, based on the second MAC control element.

4. The terminal according to claim 1, wherein
the control section determines that the one or the plurality of first TCI states and the one or the plurality of second TCI states are active TCI states in the mode using the plurality of TRPs, based on the second MAC control element.

5. A radio communication method for a terminal, comprising:
receiving a first Medium Access Control (MAC) control element for activating a unified Transmission Configuration Indication (TCI) state using a single transmission/reception point (TRP), and receiving a second MAC control element for activating a unified TCI state using a plurality of TRPs; and
when one or a plurality of first TCI states are activated using the first MAC control element, determining activation of one or a plurality of second TCI states in a mode using the plurality of TRPs, based on the second MAC control element.

6. A base station comprising:
a transmitting section that transmits a first Medium Access Control (MAC) control element for activating a unified Transmission Configuration Indication (TCI) state using a single transmission/reception point (TRP), and transmits a second MAC control element for activating a unified TCI state using a plurality of TRPs; and
a control section that, when activating one or a plurality of first TCI states using the first MAC control element, indicates activation of one or a plurality of second TCI states in a mode using the plurality of TRPs by using the second MAC control element.
